# EUROPÄISCHE PATENTSCHRIFT

(11) **EP 2 599 665 B1**
(45) Veröffentlichungstag und Bekanntmachung des Hinweises auf die Patenterteilung: **31.07.2019**
(21) Anmeldenummer: 12191462.6
(22) Anmeldetag: 06.11.2012
(51) Int. Cl.: B60Q 1/50, B60Q 1/26, F21S 41/125, F21S 41/141, F21S 41/663, F21S 41/14

(54) **BELEUCHTUNGSEINRICHTUNG UND VERFAHREN ZUR PROJEKTION VON WARNSIGNALEN**
LIGHTING DEVICE AND METHOD FOR PROJECTING WARNING SIGNALS
DISPOSITIF D'ÉCLAIRAGE ET PROCÉDÉ DE PROJECTION DE SIGNAUX D'ALARME

(30) Priorität: 02.12.2011 DE 102011120039
(43) Veröffentlichungstag der Anmeldung: 05.06.2013
(73) Patentinhaber: Volkswagen Aktiengesellschaft, 38440 Wolfsburg (DE)
(72) Erfinder: Miemietz, Stefan, 14478 Potsdam (DE); Thomschke, Sebastian, 38104 Braunschweig (DE); Grunert, Clemens, 38112 Braunschweig (DE)

(56) Entgegenhaltungen:
- EP-A1- 2 340 965
- DE-A1- 10 230 639
- DE-A1-102008 008 884
- DE-A1-102009 009 473
- DE-A1-102009 054 101
- US-A1- 2005 117 364
- US-A1- 2006 285 341
- US-A1- 2007 053 195
- US-A1- 2008 198 372

## Beschreibung

Die Erfindung betrifft eine Beleuchtungseinrichtung für Kraftfahrzeuge sowie ein Verfahren zur Projektion von Warnsignalen für andere Verkehrsteilnehmer.

Moderne Kraftfahrzeuge umfassen eine zunehmende Anzahl von Fahrerassistenzsystemen, die die Insassensicherheit erhöhen. Hierzu gehören beispielsweise Abstandsregelsysteme, Airbags und Precrash-Sensoren, die einen bevorstehenden Unfall sensieren und beispielsweise Gurtstraffer vorspannen. Neben der Erhöhung der eigenen Sicherheit ist es auch wünschenswert, die anderen Verkehrsteilnehmer auf einen bevorstehenden bzw. drohenden Zusammenstoß vorzubereiten. Dies stößt jedoch teilweise an gesetzliche Grenzen. So ist die Anbringung zusätzlicher farbiger oder weißer Lichtquellen mit Sichtbarkeit für andere Verkehrsteilnehmer derzeit nicht erlaubt, da diese zu Fehlinterpretationen führen könnten.

Aus der DE 103 53 085 A1 ist eine Fahrlichteinrichtung bekannt, umfassend ein Fahrleuchtmittel zur Ausleuchtung der Fahrbahn in Vorwärtsrichtung sowie eine elektronische Steuereinrichtung zur Ansteuerung des Fahrleuchtmittels, wobei die Steuereinrichtung derart ausgebildet ist, dass diese das Fahrleuchtmittel derart ansteuert, dass dieses im eingeschalteten Zustand ein in der Intensität und/oder Farbe wechselndes Lichtsignal aussendet. Ziel dieser Fahrlichteinrichtung ist, dass die anderen Verkehrsteilnehmer das Kraftfahrzeug, vorzugsweise ein Motorrad, besser wahrnehmen.

Aus der DE 10 2008 008 884 A1 ist ein Fahrzeugleuchtensystem bekannt, mit einer Erfassungseinrichtung zur Erfassung eines Raumwinkels, in dem sich ein Verkehrsteilnehmer befindet, und mit einer Leuchteinrichtung zum Abstrahlen von Signallicht mit einer raumwinkelabhängigen spektralen Verteilung und/oder einer raumwinkelabhängigen Intensität. Weiter umfasst das Fahrzeugleuchtensystem ein Signalisierungsbedienelement und eine Steuereinrichtung, die mit der Erfassungseinrichtung, der Leuchteinrichtung und dem Signalisierungsbedienelement gekoppelt ist. Die Steuereinrichtung ist derart ausgebildet, dass die raumwinkelabhängige Intensität und/oder die raumwinkelabhängige spektrale Verteilung des abgestrahlten Lichts als Reaktion auf die Betätigung des Signalisierungsbedienelementes und die Erfassung eines Raumwinkels, in dem sich ein Verkehrsteilnehmer befindet, variiert wird.

Aus der DE 10 2009 009 473 A1 ist ein Verfahren zum Unterstützen eines Fahrers eines Fahrzeugs und anderer Verkehrsteilnehmer bekannt, bei dem andere Verkehrsteilnehmer im Umfeld des Fahrzeugs detektiert werden. Anschließend wird analysiert, ob ein anderer Verkehrsteilnehmer eine Kollisionsgefahr für das Fahrzeug darstellt. Von dem Fahrzeug wird ein Lichtzeichen auf die Fahrbahn projiziert, das den anderen Verkehrsteilnehmer auf die Kollisionsgefahr aufmerksam macht.

Aus der US 2008/0198372 A1 ist eine Fahrzeugleuchte bekannt, wobei mittels einer Einrichtung zusätzlich eine Abbildung vor dem Fahrzeug erzeugt werden kann, die Informationen für den Fahrzeugführer enthält.

Aus der US 2007/0053195 A1 ist eine optische Warneinrichtung bekannt, mittels derer Licht auf eine Straße projiziert werden kann.

Aus der US 2005/0117364 A1 ist ein Fahrtrichtungsanzeiger für Kraftfahrzeuge bekannt, der bei Aktivierung optisch Warnhinweise auf die benachbarte Fahrbahn projiziert.

Aus der DE 10 2009 054 101 A1 ist eine Beleuchtungsvorrichtung für ein Fahrzeug bekannt, umfassend zumindest einen Scheinwerfer, welcher eine Strahlungsquelle zur Erzeugung infraroter Strahlung und eine Lichtquelle zur Erzeugung sichtbaren Lichts aufweist. Die Strahlungsquelle ist aus mehreren Infrarot-Leuchtdioden-Modulen gebildet, welche jeweils zumindest eine Infrarot-Leuchtdiode umfassen. Die Lichtquelle ist zumindest aus einem Leuchtdioden-Modul gebildet, welches zumindest eine Leuchtdiode umfasst, wobei die Lichtquelle in die Strahlungsquelle integriert ist.

Aus der EP 2 340 965 A1 ist eine gattungsgemäße Beleuchtungseinrichtung für ein Kraftfahrzeug bekannt, umfassend mindestens eine Fahrzeugleuchte, die derart ausgebildet ist, dass diese in einer zugelassenen Zielfarbe emittiert, wobei in der Beleuchtungseinrichtung eine Projektionsoptik mit Leuchtmitteln angeordnet ist, wobei die Projektionsoptik mit den Leuchtmitteln derart ausgebildet sind, dass diese Licht in einer Projektionsfarbe emittiert. Die Projektionsfarbe ist dabei vorzugsweise blau, wobei die Projektion zur Hervorhebung von Fahrbahnmarkierungen dient.

Der Erfindung liegt das technische Problem zugrunde, eine Beleuchtungseinrichtung zu schaffen sowie ein Verfahren zur Verfügung zu stellen, bei denen andere Verkehrsteilnehmer durch Streulichtanteile der Projektionsfarbe weniger gestört werden.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Hierzu umfasst die Beleuchtungseinrichtung für ein Kraftfahrzeug mindestens eine Fahrzeugleuchte, die in einer zugelassenen Zielfarbe Licht emittiert, wobei in der Beleuchtungseinrichtung eine Projektionsoptik mit Leuchtmitteln angeordnet ist, mittels derer Licht der Leuchtmittel in einer Projektionsfarbe abgebildet, wobei Streulichtanteile der Projektionsfarbe durch mindestens eine Streulichtquelle einer Mischfarbe in die Zielfarbe gewandelt werden. Durch die Projektionsoptik kann somit ein optisch gut wahrnehmbarer Lichtkegel in einem kleinen Öffnungswinkel erzeugt werden, der einzelne Verkehrsteilnehmer im Bereich des Lichtkegels warnt, ohne andere nicht betroffene Verkehrsteilnehmer zu irritieren. Durch die räumliche Zuordnung zur Beleuchtungseinrichtung handelt es sich auch nicht um zusätzliche Lichtquellen im gesetzlichen Sinne. Vorzugsweise wird neben der räumlichen Zuordnung auch eine zeitliche Zuordnung vorgenommen, d.h. die Leuchtmittel werden nur zusammen mit der Fahrzeugleuchte betrieben. Die Beleuchtungseinrichtung kann prinzipiell jede am Kraftfahrzeug verbaute Lichtquelle, wie beispielsweise Tagesfahrlicht, Fahrlicht, Fernlicht, Fahrtrichtungsanzeige-Blinker oder der Warnblinker, sein. Die Zielfarbe ist dabei von der Beleuchtungseinrichtung und dem Land abhängig. So ist beispielsweise in Deutschland die Zielfarbe für Fahrlicht Weiß, wohingegen in Frankreich die Zielfarbe für Fahrlicht Gelb ist.

Ist die Projektionsfarbe jedoch nicht gleich der Zielfarbe, kommt es an der Projektionsoptik zwangsläufig zu einer Streuung, d.h. die Projektionsfarbe ist nicht nur im schmalen Lichtkegel wahrnehmbar, sondern über die Streulichtanteile in einem großen Öffnungswinkel wahrnehmbar, was andere Verkehrsteilnehmer irritieren könnte. Dieser Streulichtanteil ist dabei abhängig von den Leuchtmitteln und der Projektionsoptik und kann beispielsweise 20 % der Emission betragen. Dieser Streulichtanteil wird nun mittels einer Streulichtquelle mit einer Mischfarbe in die Zielfarbe gemischt. Ist die Zielfarbe beispielsweise Gelb und die Projektionsfarbe Rot, so ist die Streulichtquelle Grün, so dass die roten und grünen Streulichtanteile Gelb ergeben. Die Leuchtstärke der Streulichtquelle wird dabei auf den Streulichtanteil an der Projektionsoptik angepasst.

Die Leuchtmittel können dabei Bestandteil der Fahrzeugleuchte sein oder als separate Leuchtmittel ausgebildet sein.

In einer weiteren Ausführungsform ist dem Leuchtmittel und/oder der Projektionsoptik eine Steuereinrichtung zugeordnet, wobei die Steuereinrichtung die Leuchtmittel und/oder die Projektionsoptik in Abhängigkeit der Signale eines Fahrerassistenzsystems ansteuert. Das Fahrerassistenzsystem ist beispielsweise eine Kollisionsvermeidungseinrichtung, die eine Kamera zur Erfassung von Objekten umfasst. Dabei kann vorgesehen sein, dass die Projektionsoptik verstellbar ist, so dass der Lichtkegel auf bzw. neben das Objekt gerichtet wird.

In einer weiteren Ausführungsform wird die Helligkeit der Fahrzeugleuchte in Abhängigkeit der Helligkeit der aktivierten Leuchtmittel angepasst. Strahlt beispielsweise das Fahrlicht üblicherweise mit 1.000 W und beträgt der Streulichtanteil 100 W, so wird die Helligkeit des Fahrlichts auf 900 W reduziert, da sich der Streulichtanteil von der Projektion und der Mischfarbe überlagert und somit wieder 1.000 W ergibt.

Allgemein sei angemerkt, dass die Projektionen gepulst oder dauerhaft sein können.

In einer weiteren Ausführungsform umfasst die Fahrzeugleuchte Leuchtmittel der Projektionsfarbe und Leuchtmittel der Streulichtquelle der Mischfarbe, wobei der Öffnungswinkel der Leuchtmittel der Projektionsfarbe veränderbar ist. Im normalen Betrieb strahlen dann beide Leuchtmittel mit einem großen Öffnungswinkel ab, wobei durch die Mischung die Zielfarbe der Beleuchtungseinrichtung sich einstellt. Zur Erzeugung einer Projektion wird dann der Öffnungswinkel der Leuchtmittel für die Projektion verkleinert. Dabei sei angemerkt, dass der Öffnungswinkel nicht für alle Leuchtmittel der Projektionsfarbe verändert werden muss. Die Veränderung des Öffnungswinkels kann durch geeignete Ansteuerung der Leuchtmittel erfolgen, indem beispielsweise einzelne LEDs eines Arrays gezielt stärker angeregt bzw. andere LEDs gezielt ausgeschaltet werden. Alternativ oder kumulativ kann die Projektionsoptik mechanisch oder elektrisch verstellbar sein, so dass diese beispielsweise ein- und ausfahrbar ist oder die Abbildungscharakteristik der Projektionsoptik verstellbar ist.

Die Erfindung wird nachfolgend anhand bevorzugter Ausführungsbeispiele näher erläutert. Die Fig. zeigen:
- Fig. 1: eine schematische Darstellung einer Beleuchtungseinrichtung in einem Beispiel, das nicht Teil der Erfindung ist,
- Fig. 2: eine schematische Darstellung einer Beleuchtungseinrichtung in einer Ausführungsform und
- Fig. 3: eine schematische Darstellung einer Beleuchtungseinrichtung in einer weiteren Ausführungsform.

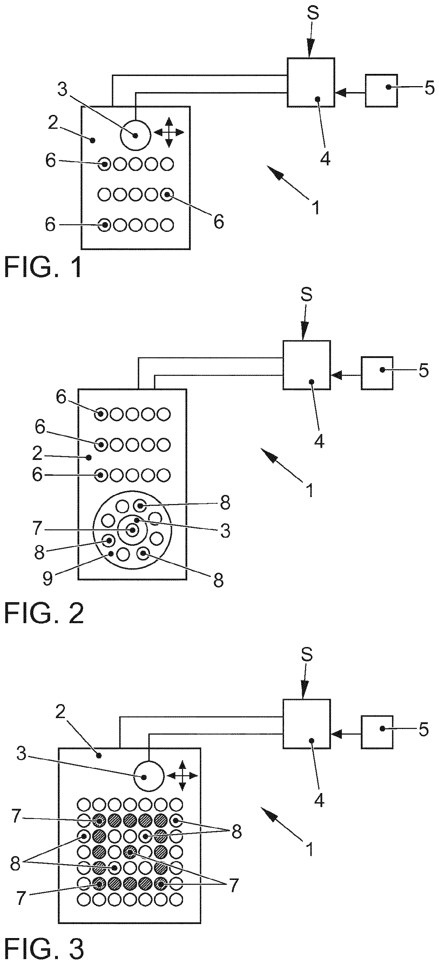

In Fig. 1 ist eine Beleuchtungseinrichtung 1 dargestellt, die eine Fahrzeugleuchte 2, eine Projektionsoptik 3, eine Steuereinrichtung 4 und eine Kamera 5 eines Fahrzeugassistenzsystems umfasst. Die Beleuchtungseinrichtung 1 ist dabei beispielsweise ein Blinker, wobei die Fahrzeugleuchte 2 mehrere gelbe LEDs als Leuchtmittel 6 umfasst. Durch ein manuelles Signal S kann ein Nutzer dabei die Fahrzeugleuchte 3 einschalten. Ist dies der Fall, erzeugt die Steuereinrichtung 4 ein Ansteuerungssignal für die Leuchtmittel 6 und die Fahrzeugleuchte 2 emittiert in der Zielfarbe Gelb. Erfasst nun die Kamera 5 ein Objekt, das gewarnt werden soll, so wird die Projektionsoptik 3 angesteuert, d.h. diese wird an eine bestimmte Stelle über die Leuchtmittel 6 bewegt, um einen schmalbandigen Lichtkegel zu projizieren. Dabei kann zusätzlich vorgesehen sein, dass die hinter der Projektionsoptik 3 befindlichen Leuchtmittel 6 verstärkt angesteuert werden, so dass diese heller leuchten. In diesem Fall sind also die Leuchtmittel der Projektionsoptik 3 gleich den Leuchtmitteln der Fahrzeugleuchte 2 und Zielfarbe und Projektionsfarbe (Signalfarbe) sind gleich, nämlich Gelb. Alternativ kann vorgesehen sein, dass die Projektionsoptik 3 fest angeordnet ist und die dahinter befindlichen Leuchtmittel 6 nur eingeschaltet werden, wenn die Kamera 5 ein Objekt erkannt hat.

In der Fig. 2 ist eine Ausführungsform der Erfindung dargestellt. Dabei umfasst die Fahrzeugleuchte 2 Leuchtmittel 6 in Form von LEDs zur Emission in der Zielfarbe. Des Weiteren umfasst die Fahrzeugleuchte Leuchtmittel, die der Projektionsoptik 3 zugeordnet sind und in einer Projektionsfarbe emittieren, die ungleich der Zielfarbe der Beleuchtungseinrichtung 1 ist. Um die Leuchtmittel 7 sind Streulichtquellen 8 angeordnet, vor denen eine Streulichtscheibe 9 angeordnet ist. Die Streulichtquellen 8 emittieren dabei in einer Mischfarbe, die zusammen mit der Projektionsfarbe die Zielfarbe ergibt. Somit sind Streuungen der Leuchtmittel 7 nur in der Zielfarbe wahrnehmbar, wohingegen der schmalbandige Lichtkegel in Projektionsfarbe vom zu warnenden Objekt sehr gut wahrnehmbar ist.

Die nachfolgende Tabelle gibt einen beispielhaften Überblick über die zu verwendenden Farben:

| Zielfarbe (Mischlicht, Streulicht) | Projektionsfarbe (Signalfarbe) | Mischfarbe |
|---|---|---|
| Weiß | Rot | Türkis (Grün + Blau) |
| Weiß | Grün | Magenta (Rot + Blau) |
| Weiß | Gelb | Blau |
| Gelb | Rot | Grün |
| Gelb | Grün | Rot |
| Gelb | Gelb | - |

In der Fig. 3 ist schließlich eine weitere Ausführungsform dargestellt, wobei die Leuchtmittel der Fahrzeugleuchte 2 aus den Leuchtmitteln 7 und Streulichtquellen 8 gebildet werden oder diese zumindest umfassen. In einem Normalmodus, wo die Beleuchtungseinrichtung 1 in der Zielfarbe emittieren soll, werden sowohl die Leuchtmittel 7 als auch die Streulichtquellen 8 angesteuert, die beide in einem großen Öffnungswinkel emittieren. Durch die Mischung des Lichts der Leuchtmittel 7 und der Streulichtquellen 8 ergibt sich die Zielfarbe. Soll nun ein Lichtkegel in der Projektionsfarbe auf ein erfasstes Objekt abgebildet werden (Warnmodus), wird die Projektionsoptik 3 beispielsweise vor das zentrale Leuchtmittel 7 geschoben, so dass dieses in einem kleinen Öffnungswinkel emittiert. Die darum angeordneten Streulichtquellen 8 werden dann angepasst angesteuert, um die Streulichtanteile an der Projektionsoptik 3 zu mischen. Damit die Grundhelligkeit der Beleuchtungseinrichtung 1 nicht reduziert wird, kann dabei auch vorgesehen sein, das zentrale Leuchtmittel 7 mit höherer Intensität abstrahlen zu lassen und/oder zusätzliche Leuchtmittel zu aktivieren.

## Patentansprüche

1. Beleuchtungseinrichtung (1) für ein Kraftfahrzeug, umfassend mindestens eine Fahrzeugleuchte (2), die derart ausgebildet ist, dass diese in einer zugelassenen Zielfarbe Licht emittiert, wobei in der Beleuchtungseinrichtung (1) eine Projektionsoptik (3) mit Leuchtmitteln (7) angeordnet ist, wobei die Projektionsoptik (3) mit den Leuchtmitteln (7) derart ausgebildet sind, dass diese Licht in einer Projektionsfarbe emittiert,
**dadurch gekennzeichnet, dass**
die Projektionsoptik (3) mit den Leuchtmitteln (7) derart ausgebildet sind, dass diese Warnlichtsignale für andere Verkehrsteilnehmer erzeugen, wobei den Leuchtmitteln (7) mindestens eine Streulichtquelle (8) einer Mischfarbe zugeordnet ist, die derart ausgebildet ist, dass Streulichtanteile der Leuchtmittel (7) an der Projektionsoptik (3) in die Zielfarbe gewandelt werden.

2. Beleuchtungseinrichtung nach Anspruch 1, **dadurch gekennzeichnet, dass** die der Projektionsoptik (3) zugeordneten Leuchtmittel (7) und die Streulichtquelle (8) Bestandteil der Fahrzeugleuchte (2) sind oder als separate Leuchtmittel ausgebildet sind.

3. Beleuchtungseinrichtung nach Anspruch 1 oder 2, **dadurch gekennzeichnet, dass** den Leuchtmitteln (7, 8) und/oder der Projektionsoptik (3) eine Steuereinrichtung (4) zugeordnet ist, wobei die Steuereinrichtung (4) derart ausgebildet ist, dass diese die Leuchtmittel (7, 8) und/oder die Projektionsoptik (3) in Abhängigkeit der Signale eines Fahrerassistenzsystems ansteuert.

4. Beleuchtungseinrichtung nach einem der vorangegangenen Ansprüche, **dadurch gekennzeichnet, dass** die Beleuchtungseinrichtung (1) derart ausgebildet ist, dass die Helligkeit der Fahrzeugleuchte (2) in Abhängigkeit der Helligkeit der aktivierten Leuchtmittel (7, 8) derart angepasst sind, dass die Helligkeit in der Zielfarbe konstant ist.

5. Beleuchtungseinrichtung nach einem der vorangegangenen Ansprüche, **dadurch gekennzeichnet, dass** die Fahrzeugleuchte (2) Leuchtmittel (7) der Projektionsfarbe und Leuchtmittel der Streulichtquelle (8) der Mischfarbe umfasst, wobei die Beleuchtungseinrichtung (1) derart ausgebildet ist, dass zur Erzeugung von Warnlichtsignalen in der Projektionsfarbe der Öffnungswinkel der Leuchtmittel (7) der Projektionsfarbe veränderbar ist, so dass in einem Warnmodus die Projektionsfarbe mit einem ersten Öffnungswinkel abgestrahlt wird und in einem Normalmodus in einem zweiten Öffnungswinkel abgestrahlt wird, wobei auch der erste Öffnungswinkel kleiner als der zweite Öffnungswinkel ist.

6. Verfahren zur Projektion von Warnlichtsignalen für andere Verkehrsteilnehmer, mittels einer Beleuchtungseinrichtung (1) für Kraftfahrzeuge mit mindestens einer Fahrzeugleuchte (2), die in einer zugelassenen Zielfarbe Licht emittiert, sowie einer in der Beleuchtungseinrichtung (1) angeordneten Projektionsoptik (3) mit Leuchtmitteln (7), wobei mittels der Projektionsoptik (3) Licht der Leuchtmittel (7) in einer Projektionsfarbe abgebildet wird, wobei Streulichtanteile der Projektionsfarbe durch mindestens eine Streulichtquelle (8) einer Mischfarbe in die Zielfarbe gewandelt werden.

7. Verfahren nach Anspruch 6, **dadurch gekennzeichnet, dass** die Leuchtmittel (7, 8) Bestandteil der Fahrzeugleuchte (2) sind oder als separate Leuchtmittel ausgebildet sind.

8. Verfahren nach Anspruch 6 oder 7, **dadurch gekennzeichnet, dass** den Leuchtmitteln (7, 8) und/oder der Projektionsoptik (3) eine Steuereinrichtung (4) zugeordnet ist, wobei die Steuereinrichtung (4) die Leuchtmittel (7, 8) und/oder die Projektionsoptik (3) in Abhängigkeit der Signale eines Fahrerassistenzsystems ansteuert.

9. Verfahren nach einem der Ansprüche 6 bis 8, **dadurch gekennzeichnet, dass** die Helligkeit der Fahrzeugleuchte (2) in Abhängigkeit der Helligkeit der aktivierten Leuchtmittel (7, 8) angepasst wird, so dass die Helligkeit in der Zielfarbe konstant ist.

10. Verfahren nach einem der Ansprüche 6 bis 9, **dadurch gekennzeichnet, dass** die Fahrzeugleuchte (2) Leuchtmittel (7) der Projektionsfarbe und Leuchtmittel der Streulichtquelle (8) der Mischfarbe umfasst, wobei der Öffnungswinkel der Leuchtmittel (7) der Projektionsfarbe veränderbar ist, so dass in einem Warnmodus die Projektionsfarbe mit einem ersten Öffnungswinkel abgestrahlt wird und in einem Normalmodus in einem zweiten Öffnungswinkel abgestrahlt wird, wobei der erste Öffnungswinkel kleiner als der zweite Öffnungswinkel ist.

## Claims

1. A lighting device (1) for a motor vehicle, comprising at least one vehicle light (2), which is designed in such a manner that the latter emits light in an approved target color, wherein in the lighting device (1) a projection lens (3) with lighting means (7) is arranged, wherein the projection lens (3) with the lighting means (7) is designed in such a manner that the latter emits light in a projection color, **characterized in that**
the projection lens (3) is designed with the lighting means (7) in such a manner that the latter generate warning light signals for other road users, wherein at least one scattered light source (8) of a mixed color is assigned to the lighting means (7), which is designed in such a manner that the scattered light portions of the lighting means (7) are converted at the projection lens (3) into the target color.

2. A lighting device according to Claim 1, **characterized in that** the lighting means (7) and the scattered light source (8) assigned to the projection lens (3) are components of the vehicle light (2) or are designed as separate lighting means.

3. A lighting device according to Claim 1 or 2, **characterized in that** a control device (4) is assigned to the lighting means (7, 8) and/or to the projection lens (3), wherein the control device (4) is designed in such a manner that the latter controls the lighting means (7, 8) and/or the projection lens (3) depending on the signals of a driver assistance system.

4. A lighting device according to any one of the preceding claims, **characterized in that** the lighting device (1) is designed in such a manner that the brightness of the vehicle light (2) is adapted depending on the brightness of the activated lighting means (7, 8) in such a manner, that the brightness in the target color is constant.

5. A lighting device according to any one of the preceding claims, **characterized in that** the vehicle light (2) comprises lighting means (7) of the projection color and lighting means of the scattered light source (8) of the fixed color, wherein the lighting device (1) is designed in such a manner that for the generation of warning light signals in the projection color the aperture angle of the lighting means (7) of the projection color is variable, so that in a warning mode the projection color is emitted at a first aperture angle and in a normal mode is emitted at a second aperture angle, wherein the first aperture angle is also smaller than the second aperture angle.

6. A method for the projection of warning light signals for other road users, by means of a lighting device (1) for motor vehicles with at least one vehicle light (2), which emits light in an approved target color, as well as a projection lens (3) arranged in the lighting device (1) with lighting means (7), wherein by means of the projection lens (3) light of the lighting means (7) is projected in a projection color, wherein scattered light portions of the projection color are converted by at least one scattered light source (8) of mixed color into the target color.

7. A method according to Claim 6, **characterized in that** the lighting means (7, 8) are components of the vehicle light (2) or are designed as separate lighting means.

8. A method according to Claim 6 or 7, **characterized in that** a control device (4) is assigned to the lighting means (7, 8) and/or to the projection lens (3), wherein the control device (4) controls the lighting means (7, 8) and/or the projection lens (3) depending on the signals of the driver assistance system.

9. A method according to any one of Claims 6 to 8, **characterized in that** the brightness of the vehicle light (2) is adapted depending on the brightness of the activated lighting means (7, 8), so that the brightness is constant in the target color.

10. A method according to any one of Claims 6 to 9, **characterized in that** the vehicle light (2) comprises lighting means (7) of the projection color and lighting means of the scattered light source (8) of the mixed color, wherein the aperture angle of the lighting means (7) of the projection color is variable, so that in a warning mode the projection color is emitted at a first aperture angle and in a normal mode is emitted at a second aperture angle, wherein the first aperture angle is smaller than the second aperture angle.

## Revendications

1. Equipement d'éclairage (1) pour un véhicule automobile, comprenant au moins une lampe de véhicule (2) qui est constituée de telle sorte que celle-ci émet de la lumière dans une couleur cible autorisée, une optique de projection (3) avec des moyens lumineux (7) étant disposée dans l'équipement d'éclairage (1), l'optique de projection (3) avec les moyens lumineux (7) étant constituée de telle sorte qu'elle émet de la lumière dans une couleur de projection,
**caractérisé en ce que**
l'optique de projection (3) avec les moyens lumineux (7) est constituée de telle sorte que ceux-ci produisent des signaux lumineux d'avertissement pour d'autres usagers de la route, au moins une source de lumière diffuse (8) d'une couleur composite étant affectée aux moyens lumineux (7) et étant constituée de telle sorte que des fractions de lumière diffuse des moyens lumineux (7) sont convertis en couleur cible sur l'optique de projection (3).

2. Equipement d'éclairage selon la revendication 1,
**caractérisé en ce que** les moyens lumineux (7) affectés à l'optique de projection (3) et la source de lumière diffuse (8) font partie de la lampe de véhicule (2) ou sont constitués en tant que moyens lumineux séparés.

3. Equipement d'éclairage selon la revendication 1 ou 2,
**caractérisé en ce qu'**un équipement de commande (4) est affecté aux moyens lumineux (7,8) et/ou à l'optique de projection (3), l'équipement de commande (4) étant constitué de telle sorte qu'il pilote les moyens lumineux (7,8) et/ou l'optique de projection (3) en fonction des signaux d'un système d'aide à la conduite.

4. Equipement d'éclairage selon l'une des revendications précédentes, **caractérisé en ce que** l'équipement d'éclairage (1) est constitué de telle sorte que la luminosité de la lampe de véhicule (2) est adaptée en fonction de la luminosité des moyens lumineux (7,8) activés de telle sorte que la luminosité dans la couleur cible est constante.

5. Equipement d'éclairage selon l'une des revendications précédentes, **caractérisé en ce que** la lampe de véhicule (2) comprend des moyens lumineux (7) de la couleur de projection et des moyens lumineux de la source de lumière diffuse (8) de la couleur composite, l'équipement d'éclairage (1) étant constitué de telle sorte que, pour la production de signaux lumineux d'avertissement dans la couleur de projection, l'angle d'ouverture des moyens lumineux (7) de la couleur de projection est variable de telle sorte que, dans un mode d'avertissement, la couleur de projection est émise avec un premier angle d'ouverture et, dans un mode normal, est émise dans un deuxième angle d'ouverture, le premier angle d'ouverture étant également plus faible que le deuxième angle d'ouverture.

6. Procédé de projection de signaux lumineux d'avertissement pour d'autres usagers de la route, au moyen d'un équipement d'éclairage (1) pour véhicules automobiles avec au moins une lampe de véhicule (2) qui émet de la lumière dans une couleur cible autorisée, ainsi qu'avec une optique de projection (3), avec des moyens lumineux (7), disposée dans l'équipement d'éclairage (1), la lumière des moyens lumineux (7) étant reproduite dans une couleur de projection au moyen de l'optique de projection (3), des fractions de lumière diffuse de la couleur de projection étant converties en couleur cible par au moins une source de lumière diffuse (8) d'une couleur composite.

7. Procédé selon la revendication 6, **caractérisé en ce que** les moyens lumineux (7,8) font partie de la lampe de véhicule (2) ou sont constitués en tant que moyens lumineux séparés.

8. Procédé selon la revendication 6 ou 7, **caractérisé en ce qu'**un équipement de commande (4) est affecté aux moyens lumineux (7,8) et/ou à l'optique de projection (3), l'équipement de commande (4) pilotant les moyens lumineux (7,8) et/ou l'optique de projection (3) en fonction des signaux d'un système d'aide à la conduite.

9. Procédé selon l'une des revendications 6 à 8, **caractérisé en ce que** la luminosité de la lampe de véhicule (2) est adaptée en fonction de la luminosité des moyens lumineux (7,8) activés de telle sorte que la luminosité dans la couleur cible est constante.

10. Procédé selon l'une des revendications 6 à 9, **caractérisé en ce que** la lampe de véhicule (2) comprend des moyens lumineux (7) de la couleur de projection et des moyens lumineux de la source de lumière diffuse (8) de la couleur composite, l'angle d'ouverture des moyens lumineux (7) de la couleur de projection pouvant être modifié de telle sorte que, dans un mode d'avertissement, la couleur de projection est émise avec un premier angle d'ouverture et, dans un mode normal, est émise dans un deuxième angle d'ouverture, le premier angle d'ouverture étant plus faible que le deuxième angle d'ouverture.
